# EUROPEAN PATENT APPLICATION

(11) **EP 2 317 448 A1**
(43) Date of publication of application: **04.05.2011**
(21) Application number: 10189242.0
(22) Date of filing: 28.10.2010
(51) Int. Cl.: G06F 17/30

(54) **Server providing content upload service, and terminal and method for uploading content**

(30) Priority: 30.10.2009 KR 20090104010
(71) Applicant: Samsung Electronics Co., Ltd., Suwon-si, Gyeonggi-do (KR)
(72) Inventor: Lee, Keum-koo, Gyeonggi-do (KR); Choo, Hee-jeong, Gyeonggi-do (KR); Sung, Ju-yun, Gyeonggi-do (KR); Kwahk, Ji-young, Gyeonggi-do (KR)
(74) Representative: Jenkins, Richard Gavin

(57) **Abstract**

A server providing a content upload service, and a terminal and a method of uploading content, wherein the server includes a communication unit that communicates with a user terminal; a storage unit that stores information about an Application Programming Interface (API) of a site for uploading content; and a controller that provides, to the user terminal, information about upload properties of at least one site to which a user desires to upload content, based on the information about the API.

## Description

### BACKGROUND

### 1. Field of the Invention

The present invention relates generally to a server for providing a content upload service, and a terminal and a method for uploading content, and more particularly, to a server for providing a content uploading service to a plurality of social network services, and a terminal and a method of uploading content.

### 2. Description of the Related Art

A Social Network Service (SNS) is a web-based service that builds social networks, enables one-person media, one-person community and information sharing, and is often embodied as a community website that is created for expanding personal relations through interactions between participants. SNS sites allow users to interact over the Internet, e.g., using e-mail and instant messaging, and to upload various content. Examples of SNSs include Facebook®, MySpace®, Twitter®, Flickr®, and Youtube®.

Properties, sizes (i.e., allowed data sizes or file sizes), and formats of content for a user to upload are different depending on the SNS site. Additionally, the different properties of the content uploaded by a user mean that each SNS site has a different Application Programming Interface (API).

### SUMMARY

Accordingly, the present invention is designed to address at least the above-mentioned problems and/or disadvantages and to provide at least the advantages described below. An aspect of the present invention provides a content upload service that provides content upload properties to a user, and a terminal and a method for uploading content.

Another aspect of the present invention provides a server that provides content upload limit properties of an SNS site, and a terminal and a method for uploading content.

Another aspect of the present invention provides a server that provides an integrated content input user interface to enable a user to quickly upload content to a plurality of sites, and a terminal and a method for uploading content.

Another aspect of the present invention provides a server that improves a content upload environment based on sizes or properties of content, and a terminal and a method for uploading content.

In accordance with the aspects of the present invention, a server for providing a content upload service is provided. The server includes a communication unit that communicates with a user terminal; a storage unit that stores information about an API of a site for uploading content; and a controller that provides, to the user terminal, information about upload properties of at least one site to which a user desires to upload content, based on the information about the API, when the user uploads the content.

In accordance with the aspects of the present invention, a content upload method is provided for a server that provides a content upload service. The method includes receiving information about an API of a site for uploading content; and providing, to a user terminal to upload content, information about upload properties, based on the information about the API.

In accordance with the aspects of the present invention, a terminal for uploading content is provided. The terminal includes a communication unit that communicates with at least one site for uploading the content; a storage unit; a display unit; and a controller that receives information about an API of the at least one site from the at least one site, stores the information in the storage unit, and displays, on the display unit, information about upload properties of a site from among the at least one site to which a user desires to upload the content, based on the information about the API, when the user uploads the content.

In accordance with the aspects of the present invention, a content upload method is provided for a terminal including a display unit. The method includes receiving information about an API of a site for uploading the content; and displaying, on the display unit, information about upload properties of the site to which a user desires to upload the content, based on the information about the API.

### BRIEF DESCRIPTION OF THE DRAWINGS

The above and/or other aspects, features, and advantages of the present invention will become apparent and more readily appreciated from the following description of certain embodiments thereof, taken in conjunction with the accompanying drawings, in which:
FIG. 1 is a block diagram of a server for providing a content upload service according to an embodiment of the present invention;
FIG. 2 illustrates information about content upload properties of a site stored in a server according to an embodiment of the present invention;
FIG. 3 is a flowchart illustrating an uploading process between a server, a site, and a user terminal according to an embodiment of the present invention;
FIG. 4 illustrates an integrated content input User Interface (UI) and a guide UI provided by a server according to an embodiment of the present invention;
FIG. 5 illustrates an integrated content input UI and a guide UI provided by a server, when a text is input, according to an embodiment of the present invention;
FIG. 6 illustrates an integrated content input UI and a guide UI provided by a server, when an image file is input, according to an embodiment of the present invention;
FIG. 7 illustrates an integrated content input UI and a guide UI provided by a server, when an audio file is input, according to an embodiment of the present invention;
FIG. 8 illustrates an integrated content input UI and a guide UI provided by a server, when a video file is input, according to an embodiment of the present invention;
FIG. 9 illustrates a preview provided by a server according to an embodiment of the present invention;
FIG. 10 illustrates a user setting screen provided by a server according to an embodiment of the present invention;
FIG. 11 illustrates a UI for selecting a site provided by a server according to an embodiment of the present invention;
FIG. 12 is a flowchart illustrating a process of uploading content according to an embodiment of the present invention;
FIG. 13 is a flowchart illustrating a process of uploading content according to another embodiment of the present invention;
FIG. 14 is a block diagram of a terminal according to an embodiment of the present invention; and
FIG. 15 is a flowchart illustrating a process of uploading content by a terminal according to an embodiment of the present invention.

### DETAILED DESCRIPTION OF EMBODIMENTS OF THE INVENTION

Various embodiments of the present invention will be described in detail below with reference to the accompanying drawings so as to be easily realized by a person having ordinary knowledge in the art. The present invention may be embodied in various forms without being limited to the various embodiments set forth herein. Descriptions of well-known parts are omitted for clarity, and like reference numerals refer to like elements throughout the drawings.

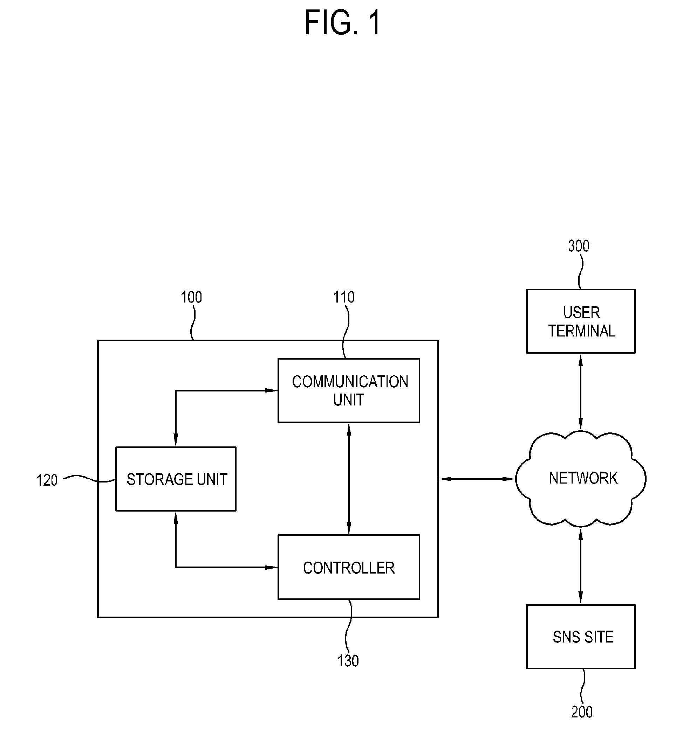

FIG. 1 is a block diagram of a server providing a content upload service according to an embodiment of the present invention.

Referring to FIG. 1, the server 100 performs a network communication with a user terminal 300 and a Social Network Service (SNS) site 200. The communication between the server 100 and the user terminal 300 and the communication between the server 100 and the SNS site 200 may be performed via a wire-based network or wireless network, e.g., through an Internet web.

The server 100 includes a communication unit 110, a storage unit 120, and a controller 300 that controls the communication unit 110 and the storage unit 120 and adjusts an overall service provided to the user terminal 300. The server 100 provides an integrated interface to enable the uploading of content, such as text, images, music, or videos, to a plurality of SNS sites 200. That is, a user may upload content to the plurality of SNS sites 200 at once using the interface provided by the server 200 without separately accessing each of the SNS sites 200.

The communication unit 110 communicates with the user terminal 300, receives a control signal, a selection signal, and the like from the user terminal 300, and transmits a User Interface (UI) provided by the controller 130 to the user terminal 300.

The user terminal 300 may be, for example, a computer, a television, or a mobile terminal and may include all media to communicate with the server 100 via a network such as Internet.

The storage unit 120 stores information about upload properties of the SNS sites 200. The stored information about the upload properties is generated based on an Application Programming Interface (API) received from the SNS sites 200.

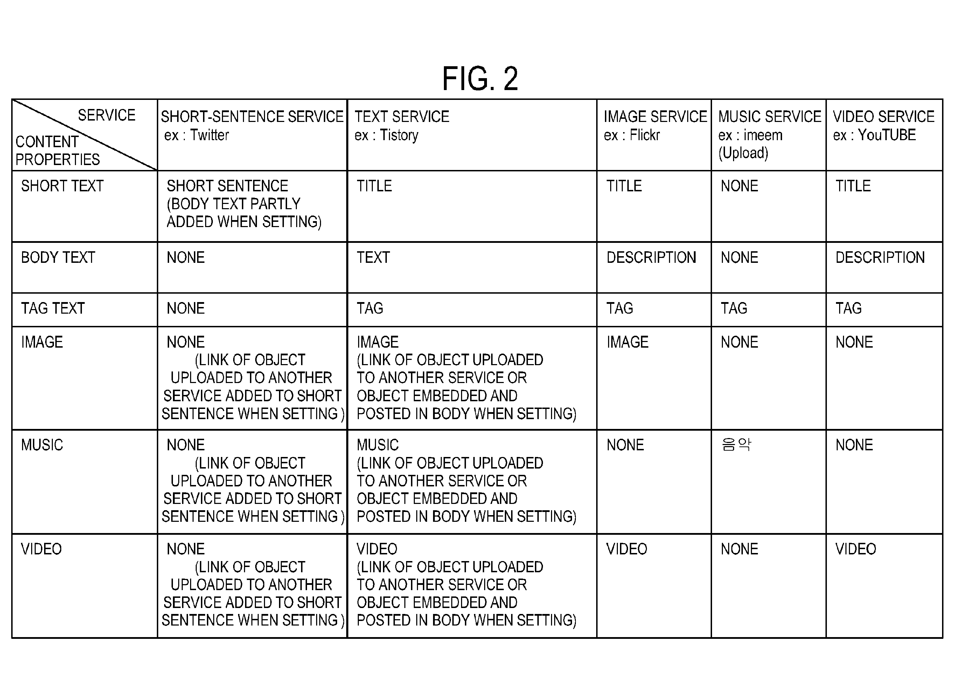

FIG. 2 illustrates information about content upload properties of sites based on an API received from SNS sites stored in a storage unit according to an embodiment of the present invention.

Referring to FIG. 2, a table shows examples of the information about upload properties for convenience of description. Specifically, properties of content to upload are classified into a text, an image, music, and a video, wherein the text is further classified into a short text such as a title, a body text, which is longer than a title, and a tag text such as keyword. The respective SNS sites upload different properties of content, i.e., the respective SNS sites provide different upload services.

For example, Twitter® provides only a short text service, and does not provide a body text service to input a long text, an image service, a music service, or a video service. However, an image, music, and a video may be uploaded to a different site, and link information about an object may be added in a short text. Tistory®, providing a body text upload service, provides upload services of a short text such as title, a body text, and a tag text. Flickr® does not provide a music upload service, but provides upload services of images and videos, imeem® provides upload services of a tag text and music, and Youtube® provides upload services of a short text, a tag text, a video, and a body text to explain the video.

The controller 130 stores the information about the upload properties of the SNS sites 200 based on the received API from the SNS sites 200. The information about the upload properties becomes a basis for generating an integrated content input UI and a guide UI, which as will be described below.

The controller 130 provides, to the user terminal 300, information about upload properties of at least one site to which a user uploads content and uploads the content input by the user to the site.

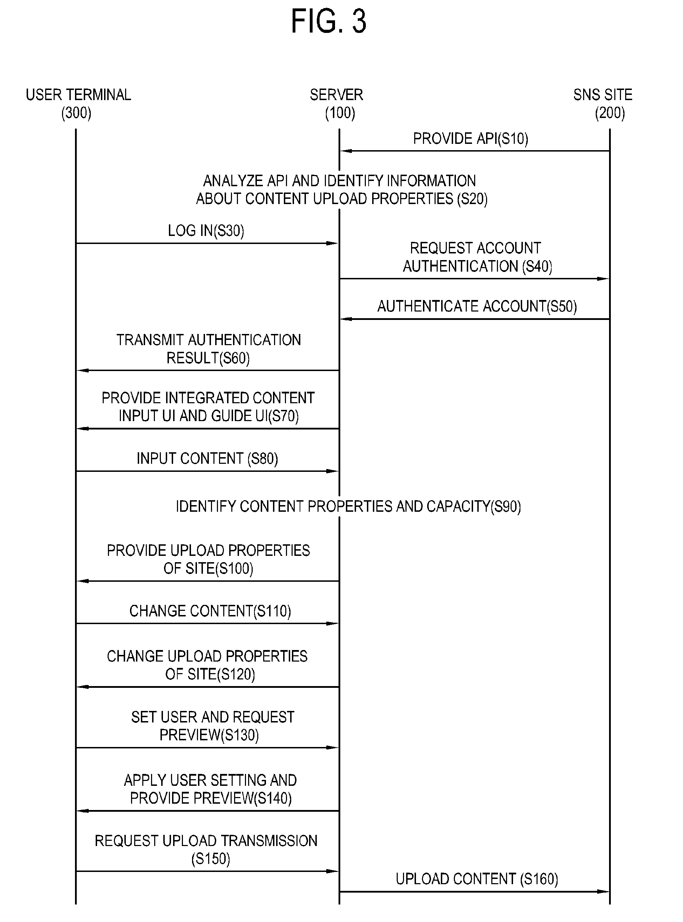

FIG. 3 is a flowchart illustrating an uploading process between a server, an SNS site, and a user terminal according to the present embodiment.

Referring to FIG. 3, as described above, the server 100 receives an API from the SNS site 200 in step S10, identifies information about content upload properties of each SNS site 200 via analysis of the API in step S20, and stores the information.

When a user accesses the server 100 and logs in to upload content in step S30, the server 100 requests account authentication from the SNS site 200 in step S40. The SNS site 200 receives a request signal for the account authentication and transmits an account authentication signal to the server 100 in step S50.

In step s60, the server 100 transmits an authentication result to the user terminal 300.

As described above, the user logs in to the server 100 once, and thereafter, the user may log in to a plurality of SNS sites 200. That is, the server 100 provides an integrated authentication interface that enables login to a plurality of SNS sites 200 at once to the user terminal 300 in order to provide an integrated interface to upload content to the SNS sites 200.

When the user completes login to the respective SNS sites 200, in step S70, the server 100 provides a Graphical User Interface (GUI) to the user terminal 300 to upload content to the SNS sites 200 to which an authentication signal is transmitted. The GUI is generated based on the API received from the SNS sites 200.

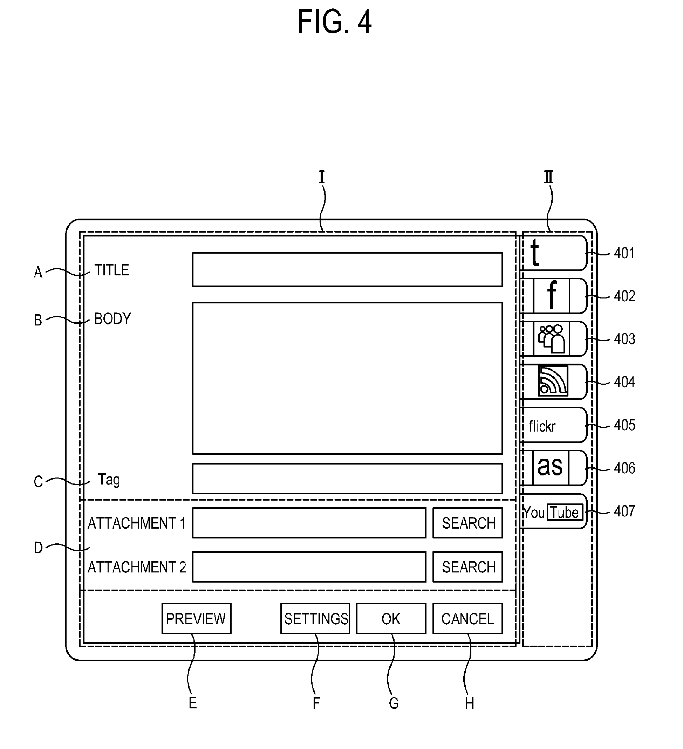

FIGs. 4 to 11 illustrate a content input UI provided by a server according to an embodiment of the present invention.

Specifically, FIG. 4 illustrates an integrated content input UI I and a guide UI II provided by the server 100. The integrated content input UI I is a space where the user inputs content, and the guide UI II includes information about at least one SNS site 200.

The integrated content input UI I includes a title field A to input a title of content, a body field B to input text, a tag field C to input a keyword, and an attachment field D to attach an image file, a video file, an audio file, etc. Under the fields to input content, there are displayed a preview E for previewing input content, a settings F for displaying a user settings that enable a user to set options regarding content input and upload, an OK G for uploading content, and a cancel H for canceling input of content.

The guide UI II includes a list of symbols of sites 401 to 407 to represent the SNS sites 200, and the site symbols 401 to 407 may display information about content upload properties in various forms.

When the user inputs content through the GUI provided to the user terminal 300 in step S80, the server 100 identifies properties and sizes of the content in step S90 and provides the information about the upload properties of the SNS sites 200 to the user terminal 300, based on an identified result and the API received from the SNS sites 200 in step S100.

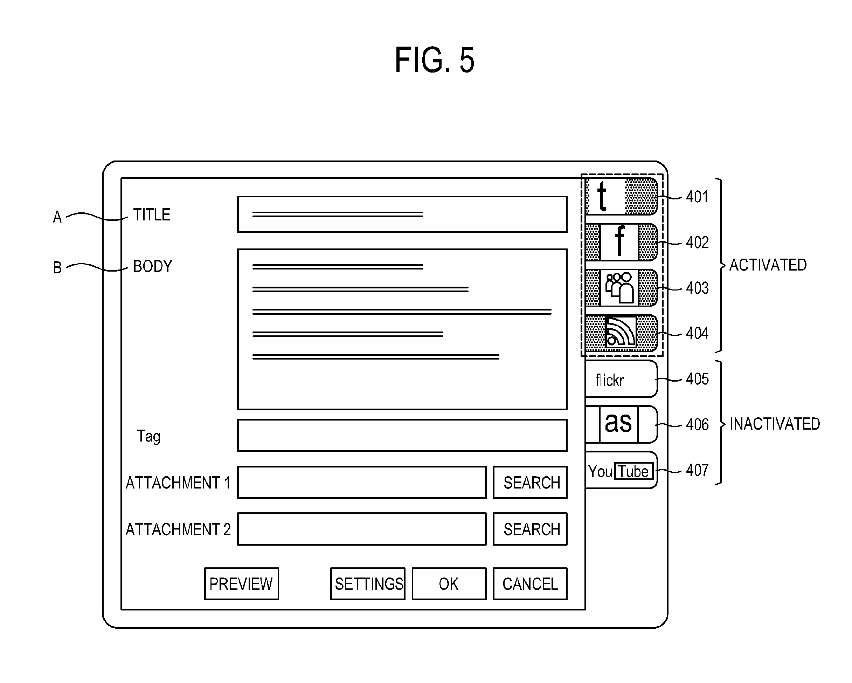

When the user inputs content in the title field A and the body field B, as illustrated in FIG. 5, the server 100 identifies that a property of the input content is a text and sizewhat size of the input content is**SIZE**. Then, a site which enables upload of the input content is displayed in the guide UI II to provide information about the site to the user terminal 300. Among the site symbols 401 to 407 of the guide UI II, only first to fourth site symbols 401 to 404, which enable upload of a title and a body text input by the user are activated, and fifth to seventh site symbols 405 to 407 are inactivated.

When the user changes content to upload in step S110, the server 100 changes information about a site to enable upload of the content in real time corresponding to the changed content in step S120. Changing content may include at least one of deleting content, adding content, and changing sizes of content.

In accordance with an embodiment of the present invention, the controller 130 changes information about a site included in the guide UI II, i.e., a display state of the site symbols, depending on whether to enable upload of input content.

When the user additionally input a body text B, as illustrated in FIG. 5, the size of content to upload increases, which may result in a site being unable to upload content input in the body field. Here, a symbol of the site being unable to upload content input in the body field is changed from activated to inactivated.

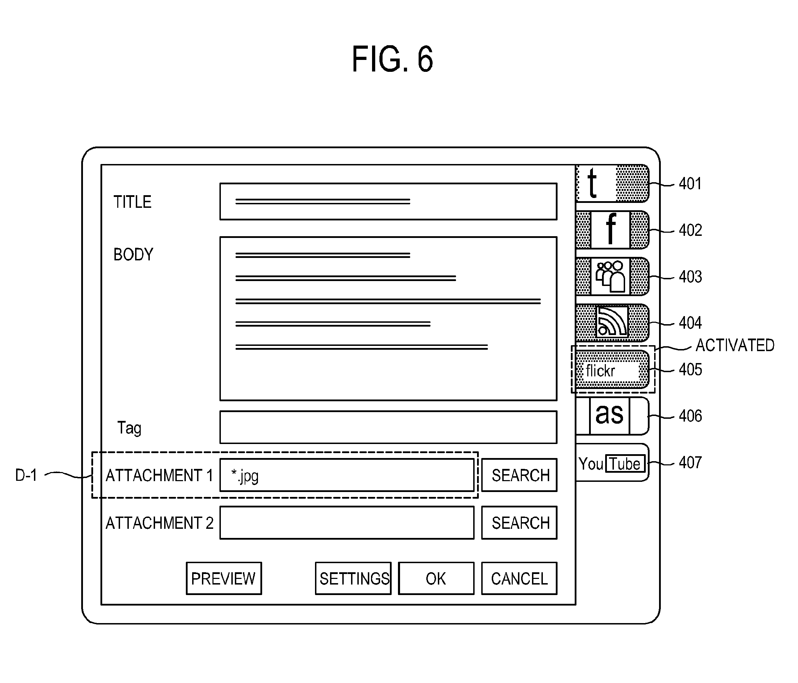

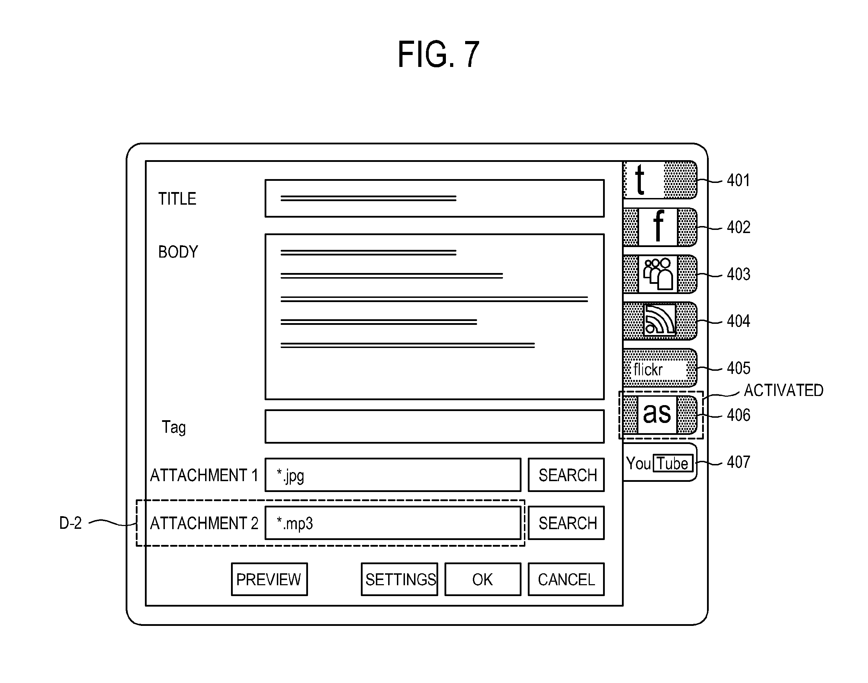

When the user inputs an image file into a first attachment field D-1, as illustrated in FIG. 6, the fifth site symbol 405 is additionally activated. When the user inputs an audio file into a second attachment field D-2, as illustrated in FIG. 7, a sixth site symbol 406 to enable upload of the audio file is additionally activated.

In FIG. 7, six symbols 401 to 406 of the seven symbols 401 to 407 are activated. In this state, when the user selects the OK icon, the content input into each field is individually uploaded to the SNS sites 200 to enable upload of the content. That is, the text input into the title field is uploaded to the sites 401 to 404 to enable upload among the six sites 401 to 406, and the image file and the audio file are uploaded individually to the sites 405 and 406 to enable upload among the six sites 401 to 406.

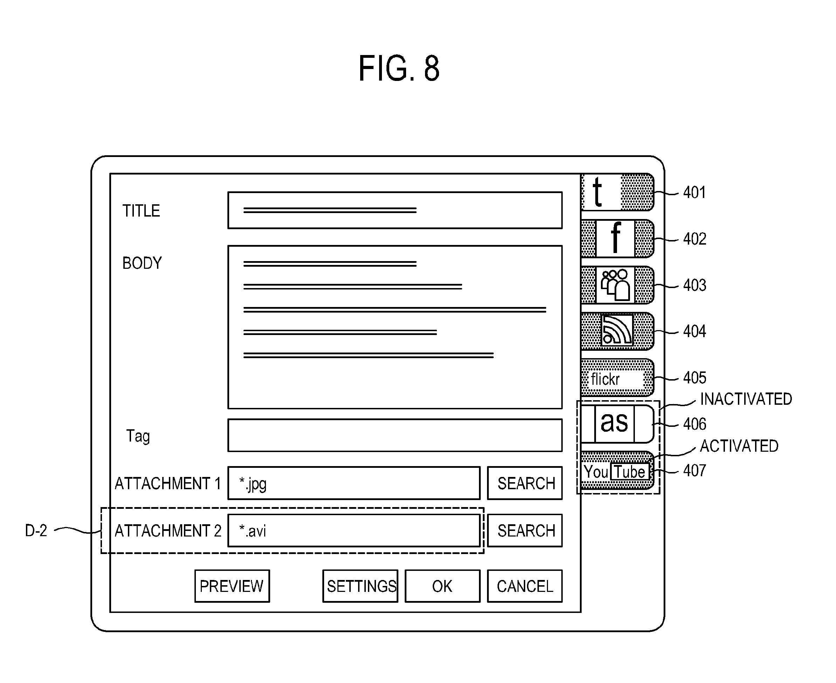

When the user deletes the audio file from the second attachment field D-2 and added a video file as illustrated in FIG. 8, the sixth site symbol 406 of the guide UI II is inactivated, and the seventh site symbol 407 to enable upload of the video file is activated.

When the content is input and then the user sets an additional option or requests a preview in step S130, the server 100 applies the option or provides a preview in step S140.

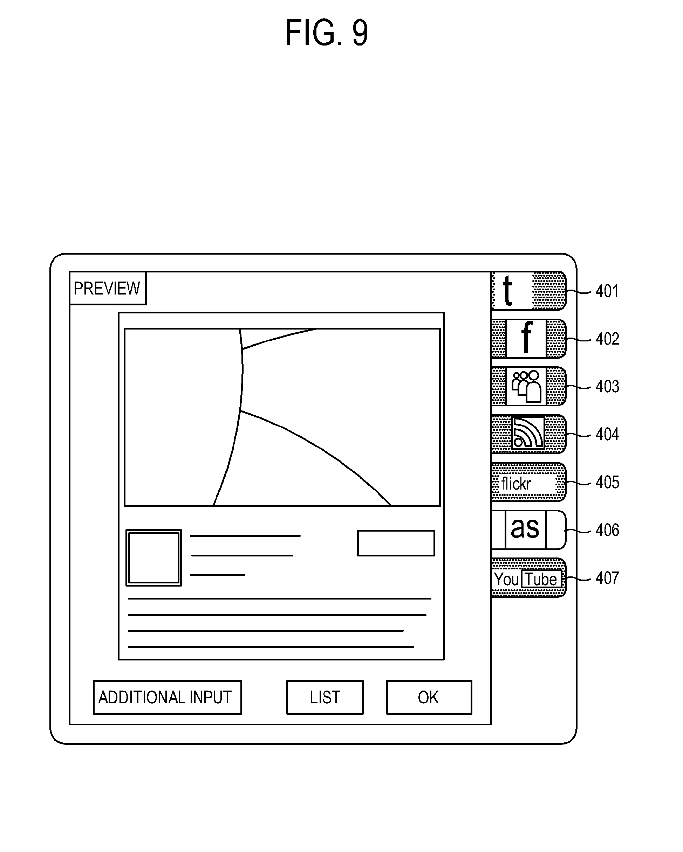

FIG. 9 illustrates a preview provided by a server according to an embodiment of the present invention.

Referring to FIG. 9, the user may preview a video input into the second attachment field D-2. Under the video, there are displayed an OK to upload content and a list to go back to a content input window.

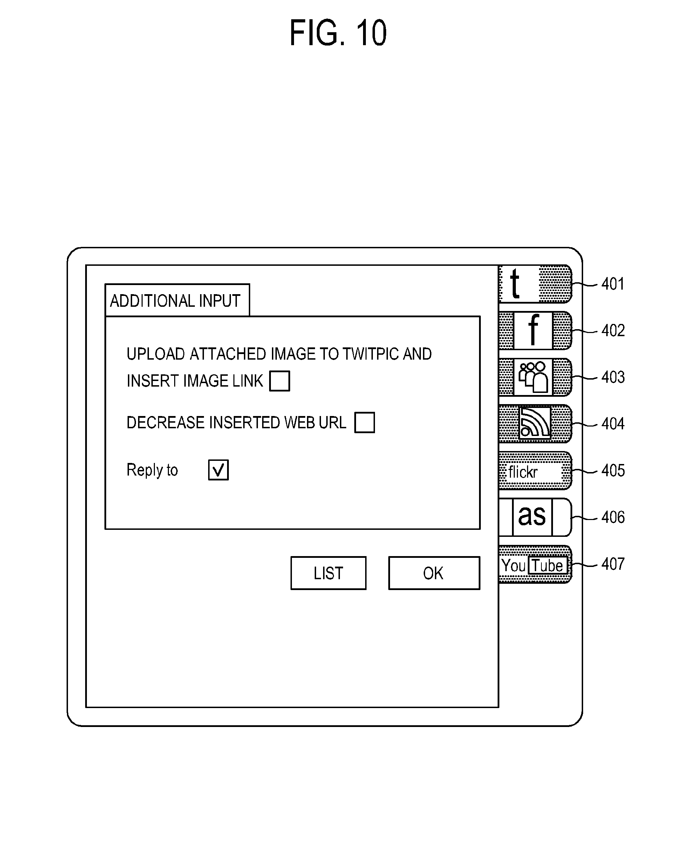

FIG. 10 illustrates an example of a user setting screen provided by a server according to an embodiment of the present invention.

Referring to FIG. 10, the user may upload part of a text input into the body field to the title field, adjust the size of content that is not uploaded, or link content uploaded to another site with the text field. That is, the user settings correspond to an interface provided by the server 100 so that the user may changes an upload scheme based on user preferences and properties of content, using the integrated interface.

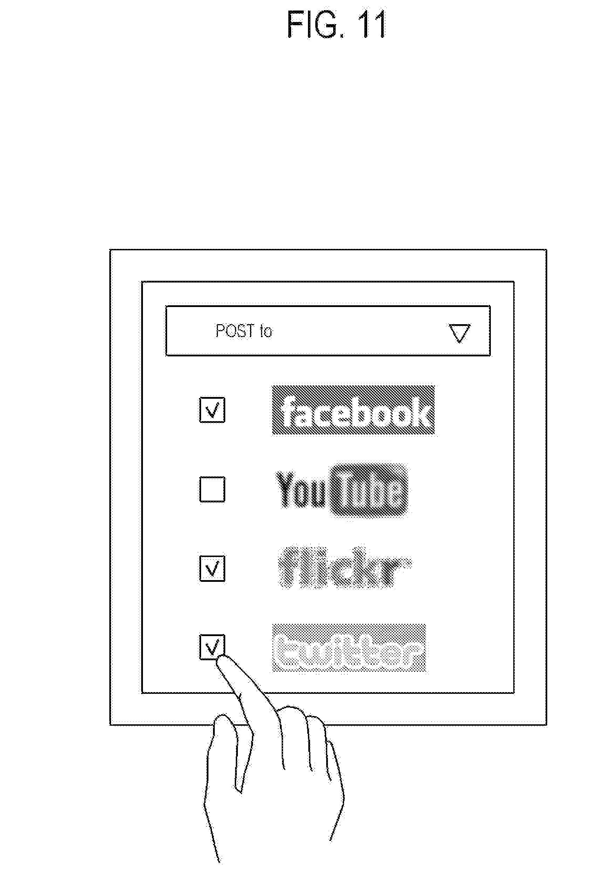

When the user selects the OK to request content upload in step S140, the server 100 provides a UI to select a site to the user terminal 300, as illustrated in FIG. 11. The user may additionally select a desired site for upload among activated sites.

When content to upload and a site for upload are selected, the server 100 uploads the content to the SNS sites 200 in step S160. The controller 130 generates an integrated API based on the information about the API received from the SNS sites 200. The integrated API may provide an integrated content input UI and change properties of content so that the content may be uploaded corresponding to the API of the respective SNS sites 200.

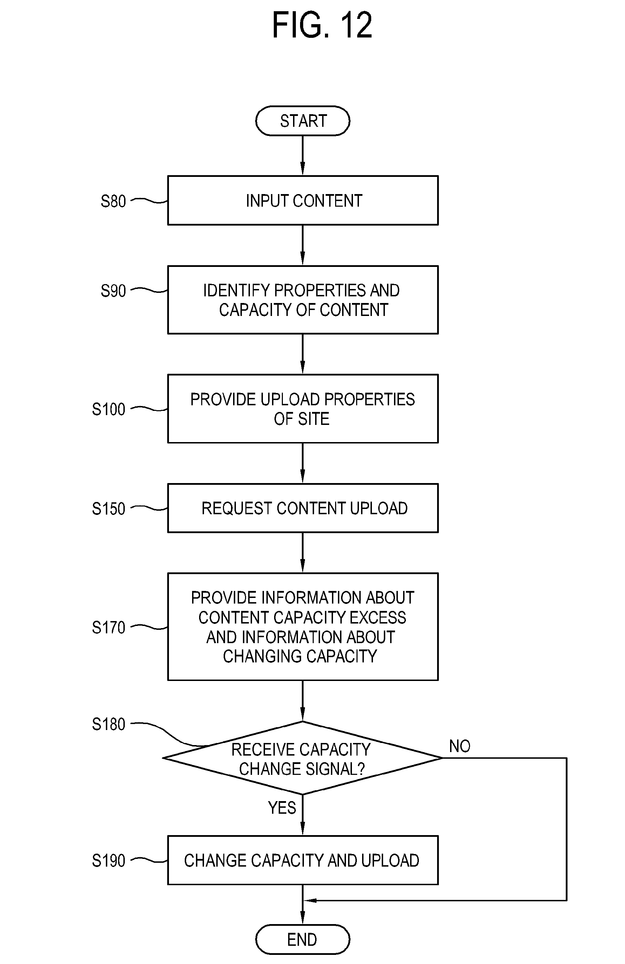

FIG. 12 is a flowchart illustrating a process of uploading content according to another embodiment of the present invention.

Referring to FIG. 12, a user inputs content in step S80, the server 100 identifies properties and a size of the input content in step S90 and provides information about upload properties of the SNS sites 200 in step S100, as described above with reference to FIG. 3.

The size of the content input by the user may be more than an allowable size uploaded to the SNS sites 200.

When a request for content upload is received from the user in step S150, the server 100 provides information about an excess size of content and information about changing size of content to the user terminal 300 in step S170. In a text, an input text is changed in color or additional input of a text is not allowed, thereby informing the user that size of content has exceeded the allowed limit.

When a signal to request a change of size is received from the user in step S180, the server 100 changes size of content and uploads the changed content to the SNS sites 200 in step S190. The server 100 changes the size of the content by decreasing a resolution of an image or increasing a compression ratio of a video, or changes a file format of the content into a format in which size is reduced. Further, a length-reduced text is transmitted, or only a user-selected part of a text may be uploaded.

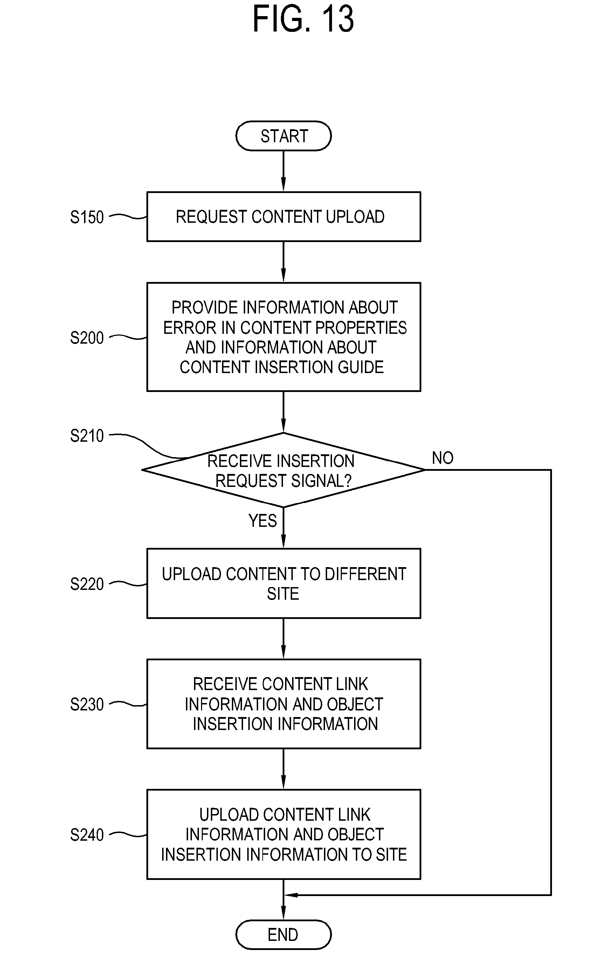

FIG. 13 is a flowchart illustrating a process of uploading content according to another embodiment of the present invention.

Referring to FIG. 13, the controller 130 uploads input content using another SNS site 200 when at least part of the content may not be loaded to an SNS site 200 that a user wants to upload to, due to the properties of the content.

When a request for content upload is received from the user in step S150, the server 100 provides information about an error in content properties and information about a content insertion guide to the user terminal 300 in step S200. When the user uploads an image, music or a video to a site that cannot upload these files, the information about the error in the content properties is provided to the user. In addition, when size of the content is larger than that allowed by the SNS site 200, the information about the error in the content properties and the information about the content insertion guide are provided to the user terminal 300.

When a signal to request content insertion is received from the user in step S210, the server 100 uploads content input by the user to another SNS site 200 in step S220.

In step s230, the server 100 receives link information about the content or object insertion information from the SNS site 200 which the content is uploaded to. The link information about the content may be Uniform Resource Locator (URL) information about the SNS site 200 to which the content is uploaded to, and the object insertion information may be an embedded tag of the uploaded content. That is, although the content is not uploaded to the SNS site 200 that the user desires to upload to, due to the properties of the content, the content may be hyperlinked using an SNS site 200 to enable upload of the content. The server 100 adds the received link information or object insertion information to the text field of the SNS site 200 to which the user desires to upload the content in step S240.

For example, an image, music, and a video may not be uploaded to Twitter® and Tistory® among the SNS sites 200 in FIG. 2, but the user may add desired content to a selected SNS site 200 in accordance with an embodiment of the present invention.

When part of content may not be uploaded due to the size of the content, the server 100 may upload as much of the content as possible to the SNS site 200 and then may upload the excess content or the entire content including the excess content to another SNS site 200. Here, URL information corresponding to the another SNS site 200 to which the content is uploaded or object insertion information may also be added to the text field. Additionally, a site to upload the content is not limited to the SNS site 200 but may include any website.

Further, when content upload is limited because of the size or kind of the content, the server 100 may not provide the information about the error in the content properties and the information about the content insertion guide, but then automatically uploads content to an available SNS site 200 and automatically adds link information or object insertion information. Accordingly, operations S200 and S210 may be omitted.

According to another embodiment of the present invention, when the user selects a site to upload content among at least one SNS site, the server 100 may provide information about upload limit properties of the selected site, for example, information about content properties and size of the content to the user terminal 300. Further, when the user selects the SNS site 200, a display state of the integrated content input UI I may be changed to activate only an input field to input content.

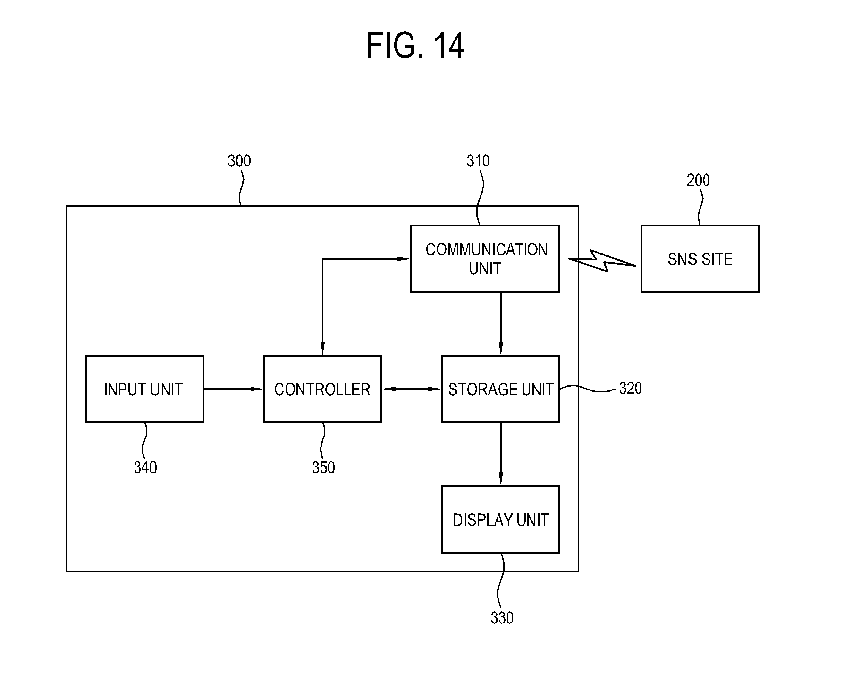

FIG. 14 is a block diagram of a terminal according to an embodiment of the present invention.

As illustrated in FIG. 14, the user terminal 300 includes a communication unit 310, a storage unit 320, a display unit 330, an input unit 340, and a controller 350. The user terminal 300 may be a computer, a television, a mobile terminal, etc., and generates an integrated interface to upload content, such as a text, an image, music, or a video, not only to one, but also a plurality of SNS sites 200.

The communication unit 310 receives information about an API received from the SNS sites 200 and transmits content input by a user to the SNS sites 200. The communication unit 310 performs wire-based and wireless network communications and may communicate with the SNS sites 200 via an Internet network.

The storage unit 320 stores the API received from the SNS sites 200 according to control by the controller 350 and stores information about upload properties of the SNS sites 200 to upload content generated based on the API. The information about the upload properties stored in the storage unit 320 may include the information illustrated in FIG. 2, for example.

The display unit 330 displays various UIs provided by the controller 350. The display unit 330 may include a variety of panels and a panel driver to drive a panel.

The input unit 340 corresponds to a UI to select and input content and to upload the content. The input unit 340 may be provided as various keys and buttons, a keyboard including the keys and buttons, a mouse, and a touch panel. When the input unit 340 is a touch panel, the input unit 340 may be mounted on an inside or outside of the display unit 330 to be integrated with the display unit 330 and may further include a pointing device.

The controller 350 receives the API from the SNS sites 200 and stores the API in the storage unit 320, displays information about upload properties of at least one site to which the user desires to upload content on the display unit 330, and uploads the content input by the user to the site.

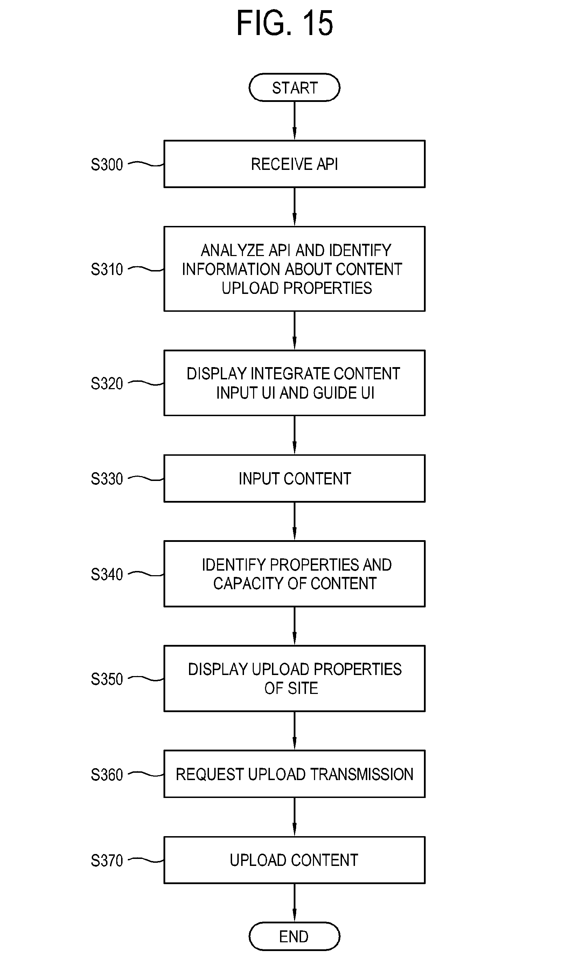

FIG. 15 is a flowchart illustrating a process of a terminal uploading content according to an embodiment of the present invention.

Referring to FIG. 15, as described above, the controller 350 receives an API from the SNS sites 200 in step S300, identifies information about content upload properties of each SNS site 200 via analysis of the API in step S310, and stores the information.

When a control signal to upload content to the SNS sites 200 is received from a user, the controller 350 displays a GUI on the display unit 330 so that the user uploads the content to the SNS sites 200 in step S320. The GUI is generated based on the API received from the SNS sites 200. The GUI displayed on the display unit 330 includes an integrated content input UI for the user to input content and a guide UI including information about at least one SNS site 200. The integrated content input UI and the guide UI may include, for example, the images illustrated in FIGS. 4 to 11.

When the user inputs content through the GUI in step S330, the controller 350 identifies properties and size of the content in step S340 and displays, on the display unit 330 , information about upload properties of the SNS site 200 to which the user desires to upload the content, based on an identified result and the API, in step S350.

When the content to upload is changed by the user, the controller 350 may change information about a site to enable upload of the content in real time corresponding to the changed content. Further, when the user sets an additional option or requests a preview, the controller 350 applies the option or displays a preview to perform a function desired by the user.

When upload transmission to finally select content to upload and a site is requested in step S360, the controller 350 uploads the content to the SNS site 200 in step S370.

Further, when size of the content input by the user is more than the allowed size for uploading to the SNS site 200, the controller 350 displays information about an excess size of content and information about changing size of content on the display unit 330 and uploads the content to the SNS site 200 via changing the size of the content.

In addition, when the input content is not uploaded to the SNS site 200 due to properties of the content, the controller 350 may add the content to the desired SNS site 200 using another site.

As described above, the various embodiments of the present invention relate to a server 100 and a user terminal 300 that connect to not just one, but a plurality of SNS sites 200 at the same time and provide an integrated interface to upload content to the connected SNS sites 200. The server 100 provides information about content upload properties of the SNS sites 200 to a user and changes size of content or links the content, thereby providing an optimal upload service to satisfy a user request. Further, such a function may be provided to the user via the user terminal 300 which can communicate with the SNS sites 200.

Although a certain embodiments of the present invention have been shown and described above, it will be appreciated by those skilled in the art that various changes may be made in these embodiments without departing from the principles and spirit of the present invention, the scope of which is defined in the appended claims and their equivalents.

## Claims

1. A content upload method of a server, the method comprising:
receiving information about Application Programming Interfaces (API) of a plurality of sites for uploading content; and
providing information about upload properties based on the information about the APIs to a user terminal for uploading the content.

2. The method according to claim 1, wherein the information about the upload properties includes information that enables the user terminal to upload the content to at least one site among the plurality of sites.

3. The method according to claim 2, further comprising changing the information that enables the user terminal to upload the content in real time, corresponding to changes in the content, when a user changes the content to upload.

4. The method according to claim 2, wherein providing the information about the upload properties comprises:
generating an integrated content input User Interface (UI) for the user to input the content;
generating a guide UI including the information about the at least one site; and
providing the integrated content input UI and the guide UI to the user terminal.

5. The method according to claim 4, further comprising changing a display state of the information about the at least one site included in the guide UI based on whether the input content is uploaded.

6. The method according to claim 4, wherein the integrated content input UI includes at least one of a title field for inputting a content title, a body field for inputting text, a tag field for inputting a keyword, an attachment field for attaching a data file, a user setting for setting an option to input and upload the content and a preview of the content to upload.

7. The method according to claim 2, further comprising uploading the content to a site selected by the user among the at least one site,
wherein uploading the content comprises changing a size of the content when the content is too large to upload to the site selected by the user.

8. The method according to claim 2, further comprising uploading the content to a site selected by the user among the at least one site,
wherein uploading the content comprises receiving link information of the uploaded content or object insertion information from a site to which the content is uploaded; and
uploading the link information or the object insertion information to the site to which the user desires to upload the content, when at least part of the content is not uploaded to the site selected by the user, due to a property of the content.

9. A content upload method of a terminal including a display unit, the method comprising:
receiving information about Application Programming Interfaces (API) of a plurality of sites for uploading content; and
displaying, on the display unit, information about upload properties of at least one site from among the plurality of sites to which a user desires to upload content, based on the information about the APIs.

10. The method according to claim 9, further comprising receiving the content,
wherein the information about the upload properties includes information that enables uploading of the content to a site among the at least one site.

11. The method according to claim 10, further comprising changing the information that enables the uploading of the content in real time, corresponding to changes in the content, when the user changes the content to upload.

12. The method according to claim 10, wherein displaying the information about the upload properties comprises:
displaying an integrated content input User Interface (UI) for inputting the content; and
displaying a guide UI including the information about the at least one site on the display unit.

13. The method according to claim 12, further comprising changing a display state of the information about the site included in the guide UI, based on whether the content is uploaded.

14. The method according to claim 9, further comprising uploading the content to a site selected by the user among the at least one site,
wherein uploading the content comprises changing a size of the content, when the content is too large to be uploaded to the site selected by the user.

15. The method according to claim 9, further comprising uploading the content to a site selected by the user among the at least one site,
wherein uploading the input content comprises receiving link information of the uploaded content or object insertion information from a site to which the content is uploaded; and
uploading the link information or the object insertion information to the site selected by the user, when at least part of the content is not uploaded to the site selected by the user, due to a property of the content.
